# EUROPÄISCHE PATENTSCHRIFT

(11) **EP 2 656 965 B1**
(45) Veröffentlichungstag und Bekanntmachung des Hinweises auf die Patenterteilung: **29.11.2017**
(21) Anmeldenummer: 13160586.7
(22) Anmeldetag: 22.03.2013
(51) Int. Cl.: B23Q 1/01, B23Q 3/157, B23Q 39/02

(54) **Bearbeitungsvorrichtung mit Werkzeugwechselanordnung, insbesondere Kettenwechsler**
Machining device with tool change system, in particular derailleur
Dispositif d'usinage doté d'un dispositif de changement d'outil, notamment magasin à chaîne

(30) Priorität: 27.04.2012 DE 102012207093
(43) Veröffentlichungstag der Anmeldung: 30.10.2013
(73) Patentinhaber: HOMAG GmbH, 72296 Schopfloch (DE)
(72) Erfinder: Calmbach, Martin, 72160 Horb-Dießen (DE); Matt, Marco, 72250 Wittlensweiler (DE)
(74) Vertreter: Hoffmann Eitle

(56) Entgegenhaltungen:
- EP-A1- 1 842 621
- EP-A1- 1 882 570
- EP-A2- 0 922 547
- EP-A2- 1 188 511
- WO-A1-2010/073823
- DE-A1- 4 301 217
- DE-A1- 10 021 684
- DE-A1- 19 518 965
- DE-C1- 10 046 972
- DE-C1- 10 124 718
- DE-U1-202007 017 768
- US-A- 5 107 910

## Beschreibung

### Technisches Gebiet

Die Erfindung betrifft eine Bearbeitungsvorrichtung, insbesondere ein Bearbeitungszentrum zur Bearbeitung von Werkstücken, die bevorzugt zumindest teilweise aus Holz, Holzwerkstoffen, Kunststoff oder dergleichen bestehen, mit einer Werkzeugwechselanordnung, bevorzugt einem Kettenwechsler, nach dem Oberbegriff von Anspruch 1 (siehe z.B. WO-2010/073823A).

### Stand der Technik

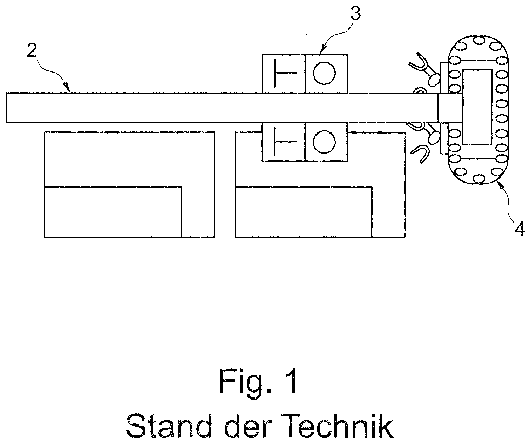

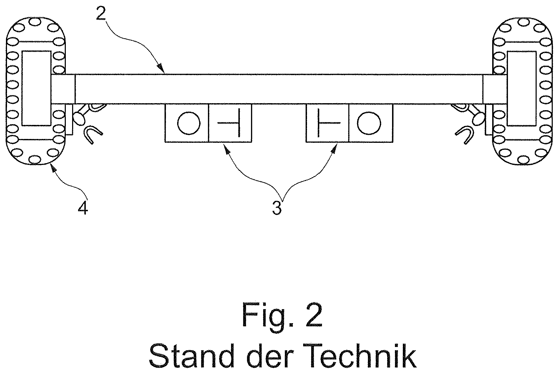

Bearbeitungsvorrichtungen der eingangsgenannten Art mit Wechselanordnungen finden bei der Herstellung von Möbeln, Küchen oder dergleichen breite Anwendung. Typischerweise ist an einer Führungseinrichtung, die sich beispielsweise senkrecht über einen Ausspanntisch erstreckt, eine Spindeleinheit an jeder der beiden Seiten dieser Führungseinrichtung vorgesehen. Eine Wechselanordnung ist senkrecht zu den Längsseiten an einer Endseite der Führungseinrichtung vorgesehen und zwei Übergabeeinrichtungen dienen zur Übermittlung von Werkzeugen an die jeweilige Spindeleinheit (siehe Fig. 1).
Ferner ist eine wie in Fig. 2 gezeigte Anordnung bekannt, bei der an beiden Endseiten der Führungseinrichtung eine Werkzeugwechselanordnung mit jeweils einer Übergabeeinrichtung vorgesehen ist und zwei Spindeleinheiten auf derselben Seite der Führungseinrichtung angeordnet sind.
Die DE 100 21 684 A1 offenbart ferner eine wie in Fig. 3 gezeigte Bearbeitungsvorrichtung mit einer Wechselanordnung, die insbesondere eine Anordnung von zwei Spindeln auf einem Schlitten aufweist, die auf einen untenliegenden Kettenwechsler zugreifen können, der entlang der Führungseinrichtung angeordnet ist.

Die EP 1 815 954 B1 offenbart eine Bearbeitungsvorrichtung mit zwei zueinander parallelen Führungseinrichtungen, an welchen jeweils eine Spindeleinheit verfahrbar angeordnet ist. Diese Führungseinrichtungen sind senkrecht zu einem Aufspanntisch angeordnet, sodass die Spindeleinheiten senkrecht zu diesem verfahren werden können. Ein Kettenwechsler ist dabei an einer Endseite der Führungseinrichtung angeordnet.

Bearbeitungsvorrichtungen mit derartigen Wechselanordnungen bzw. Kettenwechslern haben sich bewährt. Allerdings werden in dieser Hinsicht mittlerweile immer höhere Anforderungen an einen flexiblen und unabhängigen Zugriff auf die Werkzeuge gestellt. Deshalb sollten die Spindeleinheiten unabhängig voneinander auf die Werkzeugwechselanordnung zugreifen können. Gleichzeitig ist es vorteilhaft, wenn dazu nur eine Werkzeugwechselanordnung vorgesehen sein muss, sodass auf dieselben Werkzeuge gemeinsam zugegriffen werden kann. Auch der technische Aufwand sollte möglichst gering gehalten sein, insbesondere sollte vermieden werden, dass beide Seiten der Führungseinrichtung so ausgerüstet sein müssen, dass eine Spindeleinheit daran geführt werden kann. Ebenso sind die aus dem Stand der Technik bekannten Werkzeugwechselanordnungen dahingehend nachteilig, dass sie bei zwei unabhängig verfahrbaren Spindeleinheiten zwei Führungseinrichtungen oder zwei Werkzeugwechselanordnungen benötigen.

Aus dem Stand der Technik ist somit keine Anordnung bekannt, welche die verschiedenen vorteiligen Eigenschaften der einzelnen bekannten Bearbeitungsvorrichtungen gleichzeitig verkörpern kann.

### Darstellung der Erfindung

Es ist Aufgabe der vorliegenden Erfindung, die aus dem Stand der Technik bekannten Bearbeitungsvorrichtungen mit Werkzeugwechselanordnungen bezüglich des Platzbedarfs, des technischen Aufwands und der Kosten unter Ermöglichen eines unabhängigen Zugriffs zweier Spindeleinheiten und bei einer kurzen Werkzeugwechselzeit durch eine einfache Konstruktion zu verbessern.

Diese Aufgabe wird erfindungsgemäß durch eine Bearbeitungsvorrichtung mit einer Werkzeugwechselanordnung mit den Merkmalen von Anspruch 1 gelöst. Besonders vorteilhafte Weiterbildungen der Erfindung sind in den abhängigen Ansprüchen angegeben.

Zu diesem Zweck ist erfindungsgemäß vorgesehen, dass die Werkzeugwechselanordnung zumindest abschnittsweise an einer Längsseite der Führungseinrichtung angeordnet ist. Dies führt dazu, dass nur eine Seite der Führungseinrichtung so gestaltet sein muss, dass eine Spindeleinheit daran verfahrbar angeordnet ist. Gleichzeitig sind nur eine Führungseinrichtung und eine Werkzeugwechselanordnung nötig, was kosten- und platzsparend ist. Durch diese Anordnung wird die Zeit, die beim Wechsel eines Werkzeugs zwischen einer Spindeleinheit und der Werkzeugwechselanordnung benötigt wird, ebenso wie die dazugehörigen Wege minimiert.

Der Erfindung liegt der Gedanke einer geschickten Anordnung der Werkzeugwechselanordnung in einer Bearbeitungsvorrichtung mit Führungseinheit zugrunde. Die Werkzeugwechselanordnung ist, in einer Draufsicht betrachtet, zumindest abschnittsweise bzw. teilweise an einer Längsseite der Führungseinrichtung angeordnet. Unter der Längsseite sind die beiden längeren Seiten der balkenförmigen Führungseinrichtung zu verstehen, im Gegensatz zu den kürzeren querverlaufenden Enden.

Weitere Merkmale und Vorteile der Erfindung werden anhand der nachfolgenden ausführlichen Beschreibung noch näher ersichtlich werden.

### Kurze Beschreibung der Zeichnungen

- Fig. 1: zeigt eine schematische Draufsicht einer Bearbeitungsvorrichtung mit einer Werkzeugwechselanordnung eines ersten Beispiels des Stands der Technik;
- Fig. 2: zeigt eine schematische Draufsicht einer Bearbeitungsvorrichtung mit einer Werkzeugwechselanordnung eines zweiten Beispiels des Stands der Technik;

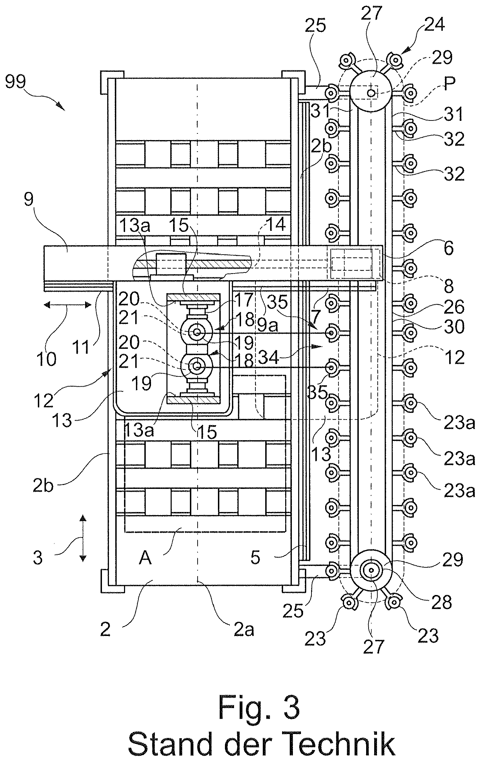

- Fig. 3: zeigt eine schematische Draufsicht einer Bearbeitungsvorrichtung mit einer Werkzeugwechselanordnung eines dritten Beispiels des Stands der Technik;

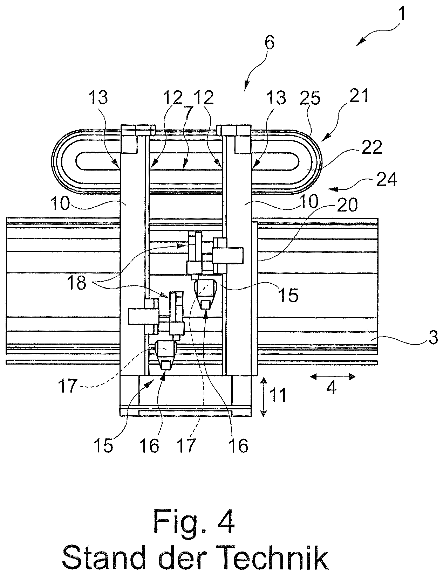

- Fig. 4: zeigt eine schematische Draufsicht einer Bearbeitungsvorrichtung mit einer Werkzeugwechselanordnung eines vierten Beispiels des Stands der Technik;
- Fig. 5: zeigt eine schematische Draufsicht einer Bearbeitungsvorrichtung mit einer Werkzeugwechselanordnung gemäß einer ersten Ausführungsform der vorliegenden Erfindung;
- Fig. 6: zeigt eine schematische Draufsicht einer Bearbeitungsvorrichtung mit einer Werkzeugwechselanordnung gemäß einer zweiten Ausführungsform, die vorliegend nicht beansprucht ist.
- Fig. 7: zeigt eine schematische Draufsicht einer Bearbeitungsvorrichtung mit einer Werkzeugwechselanordnung gemäß einer dritten Ausführungsform der vorliegenden Erfindung.
- Fig. 8: zeigt eine schematische Draufsicht einer Bearbeitungsvorrichtung mit einer Werkzeugwechselanordnung gemäß einer vierten Ausführungsform der vorliegenden Erfindung.
- Fig. 9: zeigt eine schematische Draufsicht einer Bearbeitungsvorrichtung mit einer Werkzeugwechselanordnung gemäß einer fünften Ausführungsform der vorliegenden Erfindung.
- Fig. 10: zeigt eine schematische Draufsicht einer Bearbeitungsvorrichtung mit einer Werkzeugwechselanordnung gemäß einer sechsten Ausführungsform der vorliegenden Erfindung.
- Fig. 11: zeigt eine schematische Draufsicht einer Bearbeitungsvorrichtung mit einer Werkzeugwechselanordnung gemäß einer sechsten Ausführungsform der vorliegenden Erfindung.
- Fig. 12: zeigt eine schematische Draufsicht einer Bearbeitungsvorrichtung mit einer Werkzeugwechselanordnung gemäß einer siebten Ausführungsform der vorliegenden Erfindung.

### Ausführliche Beschreibung bevorzugter Ausführungsformen

Bevorzugte Ausführungsformen der vorliegenden Erfindung werden nachfolgend ausführlich unter Bezugnahme auf die begleitenden Zeichnungen beschrieben.

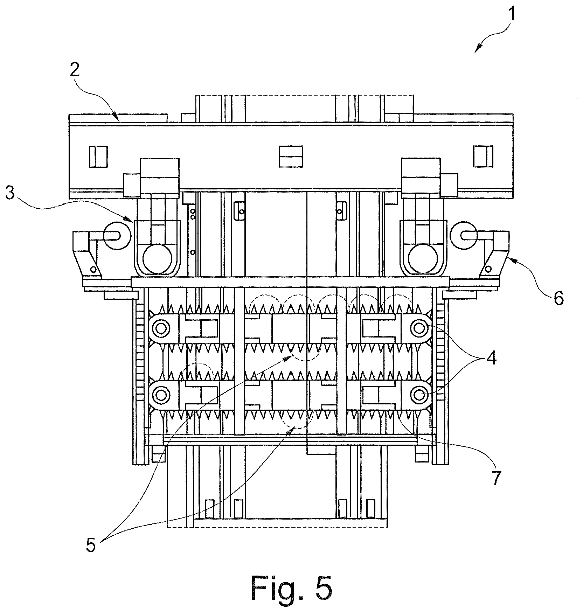

Die Bearbeitungsvorrichtung 1 als erste bevorzugte Ausführungsform der vorliegenden Erfindung ist in Fig. 5 schematisch in einer Draufsicht gezeigt. Dabei handelt es sich insbesondere um ein Bearbeitungszentrum zur Bearbeitung von Werkstücken, die bevorzugt zumindest teilweise aus Holz, Holzwerkstoffen, Kunststoff oder Ähnlichem bestehen. Diese weist eine balkenförmige Führungseinrichtung 2 auf, an der in der vorliegenden Ausführungsform zwei Spindeleinheiten 3 auf einer Seite angeordnet sind und zu dieser verfahrbar sind. Es können jedoch auch mehr oder weniger Spindeleinheiten sowie verschiedene andere Baueinheiten oder Aggregate vorhanden sein.

Die Führungseinrichtung 2 kann beispielsweise als Portal oder als Ausleger konstruiert sein. Dabei kann sie beipielsweise zu einem (nicht gezeigten Aufspanntisch) verfahrbar angeordnet sein. In die Spindeleinheiten 3 können unterschiedlichste Bearbeitungswerkzeuge und/oder Bearbeitungsaggregate (Werkzeuge) 5 eingesetzt werden, wie beispielsweise Fräßwerkzeuge, Ziehklingen, Bündigfräßaggregate, Bohreinheiten, etc.

Darüber hinaus ist eine Werkzeugwechselanordnung 4 zum Versorgen der Spindeleinheiten 3 mit den Werkzeugen 5 vorgesehen. Dabei ist die Werkzeugwechselanordnung 4, in einer Draufsicht betrachtet, zumindest abschnittsweise an einer Längsseite der Führungseinrichtung 2 (unten in Fig. 5) angeordnet. Dies führt dazu, dass nur eine Seite der Führungseinrichtung so gestaltet sein muss, dass eine Spindeleinheit daran verfahrbar angeordnet ist. Gleichzeitig sind nur eine Führungseinrichtung 2 und eine Werkzeugwechselanordnung 4 nötig. Dadurch können die Spindeleinheiten 3 auf dieselben Werkzeuge 5 zugreifen. Dies spart Platz und Kosten. Durch diese Anordnung wird außerdem die Zeit, die beim Wechsel eines Werkzeugs 5 zwischen einer Spindeleinheit 3 und der Werkzeugwechselanordnung 4 benötigt wird, ebenso wie die dazugehörigen Wege minimiert.

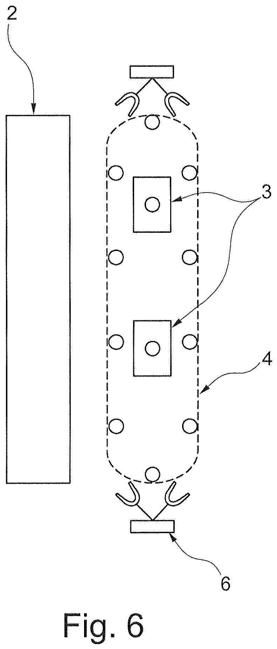

Vorteilhafterweise ist die Werkzeugwechselanordnung 4 parallel zur Führungseinrichtung 2 angeordnet. Hierbei handelt es sich um eine besonders vorteilhafte Ausführung, die technisch gut umsetzbar ist. Vorteilhafterweise ist die Werkzeugwechselanordnung 4, die vorliegend nicht beansprucht ist, bezüglich der Spindeleinheiten 3 nach oben oder unten versetzt angeordnet ist, wie in Fig. 6 dargestellt. Dadurch kann die horizontale Ausdehnung der Vorrichtung verringert werden.

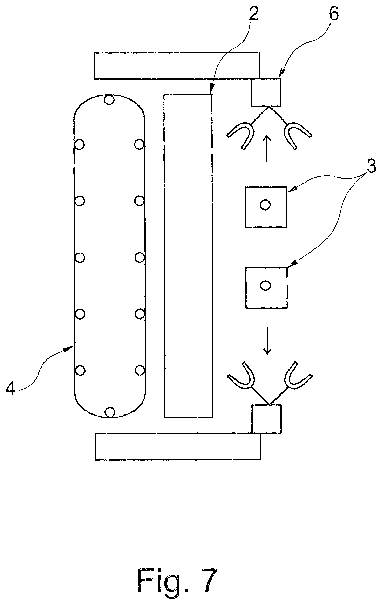

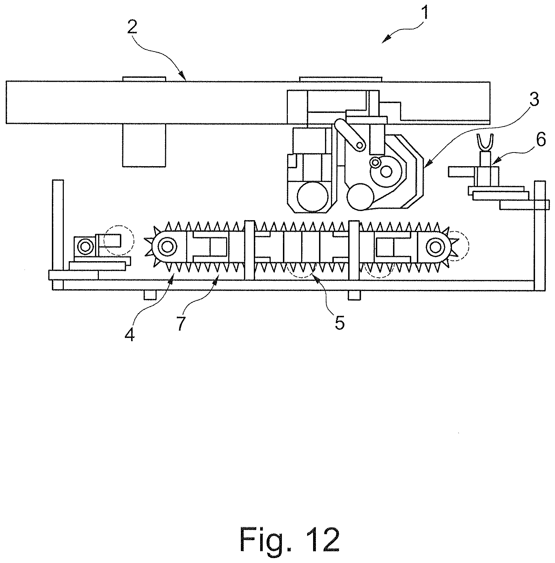

Die Werkzeugwechselanordnung kann auf einer Längsseite der Führungseinrichtung 2 vorgesehen sein, während die Spindeleinheiten 3 auf der anderen Längsseite der Führungseinrichtung 2 angeordnet sind (siehe Fig. 7). Die Spindeleinheiten 3 können aber ebenso zwischen der Führungseinrichtung 2 und der Werkzeugwechselanordnung 4 angeordnet sein, wie in Fig. 5 und 12 gezeigt. Dadurch kann der Werkzeugwechselvorgang schneller gestaltet und die Konstruktion vereinfacht werden. Beispiele hierfür sind in den Fig. 5 und 12 zu sehen. Die Spindeleinheiten 3 sind derart angeordnet, dass sie in zumindest einer Richtung unabhängig voneinander verfahrbar sind. Hierdurch wird eine schnellere Bearbeitung möglich.
Ebenso können die Spindeleinheiten 3 unterschiedlich zueinander ausgebildet sein. Dadurch ergibt sich eine große Einsatzbreite, sodass verschiedenste Bearbeitungsschritte mit spezifischen, unterschiedlichen Spindeleinheiten 3 durchgeführt werden können.
Insbesondere kann zumindest eine der Spindeleinheiten 3 als Vier-Achs-Spindeleinheit ausgebildet sein. Dies bedeutet, dass das Spindelgehäuse, welches die Spindel lagert, in drei translatorischen Achsen und einer rotatorischen Achse verfahren werden kann, wobei sich die rotatorische Achse in der vorliegenden Ausführungsform senkrecht zur Zeichenebene von Fig. 5 erstreckt. Dadurch wird die Verfahrbarkeit der Spindeleinheit 3 in eine erste Richtung durch die Relativverfahrbarkeit der Führungseinrichtung 2 und eines Aufspanntischs (nicht gezeigt) erreicht, und die beiden anderen translatorischen Verfahrwege werden durch ein Verfahren der Spindeleinheit 3 entlang bzw. an der Führungseinrichtung 2 erreicht. Auf diese Weise wird die Flexibilität gesteigert.

Alternativ oder zusätzlich ist eine Ausbildung zumindest einer der beiden Spindeleinheiten als Fünf-Achs-Spindeleinheit möglich, die eine Schwenkachse, einen Kardankopf oder dergleichen aufweist, um welche die Spindel senkrecht zu ihrer Erstreckungsrichtung schwenkbar ist. Hierdurch ermöglicht die Fünf-Achs-Spindeleinheit die Ausführung zusätzlicher Bearbeitungsvorgänge, wie beispielsweise die Erstellung von Freiformen, Kugeln etc. Auf diese Weise wird die Flexibilität erheblich gesteigert.

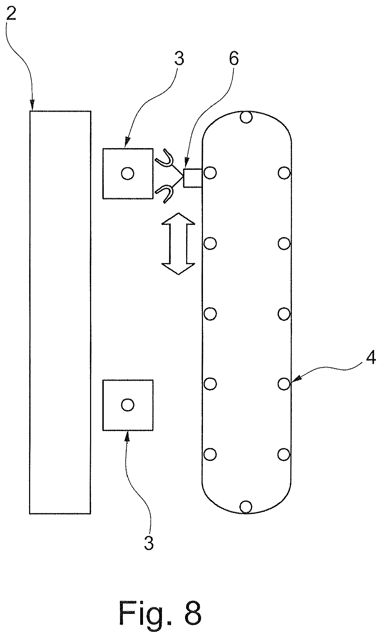

Ferner kann eine Übergabeeinrichtung 6 vorgesehen sein, welche die Werkzeuge 5 von der Werkzeugwechselanordnung 4 an die Spindeleinheiten 3 übermittelt. Hierdurch kann eine einfache und verlässliche Übermittlung erreicht werden. Eine Ausführungsform mit einer Übergabeeinrichtung 6 in Fig. 8 gezeigt.

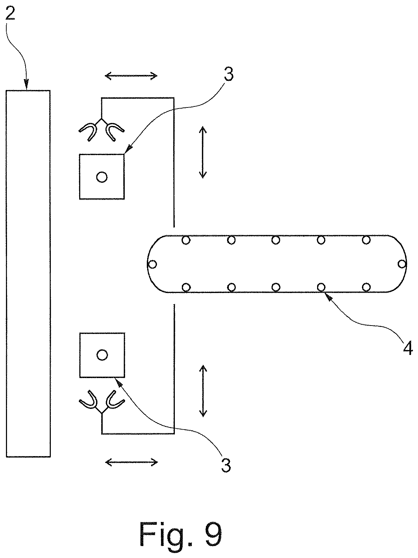

Darüber hinaus kann die Übergabeeinrichtung 6 in eine Richtung verfahrbar sein, die von der Längsrichtung der Führungseinrichtung 2 abweicht. Dadurch wird die Flexibilität der Anordnung einer Bearbeitungsvorrichtung 1 stark erhöht, wie zum Beispiel Fig. 9 verdeutlicht. Eine solche Anordnung kann in einigen Fällen vorteilhaft und gewünscht sein; jedoch müssen längere Wege zwischen der Werkzeugwechselanordnung 4 und den Spindeleinheiten 3 bei einem Werkzeugwechsel zurückgelegt werden.

Die Übergabeeinrichtung 6 kann ferner mit einem Antrieb versehen sein. Dies eröffnet weitere Möglichkeiten bezüglich der Anordnung, insbesondere einer pneumatischen Ausführung gegenüber, da die Übergabeeinrichtung nun auf vielfältigen Trajektorien bewegbar ist.

Vorzugweise sind zwei Übergabeeinrichtungen 6 vorgesehen, sodass ein Zugriff auf die Werkzeuge 5 unabhängig voneinander erfolgen kann. Dies ermöglicht ein gleichzeitiges und/oder unabhängiges Übermitteln der Werkzeuge 5 zwischen der Werkzeugwechselanordnung 4 und den Spindeleinheiten 3. So kann eine der Spindeleinheiten 3 eine Bearbeitung ausführen, während die andere Spindeleinheit 3 einen Werkzeugwechsel durchführt, ohne dass es zu einer gegenseitigen Behinderung oder Kollisionen kommt.

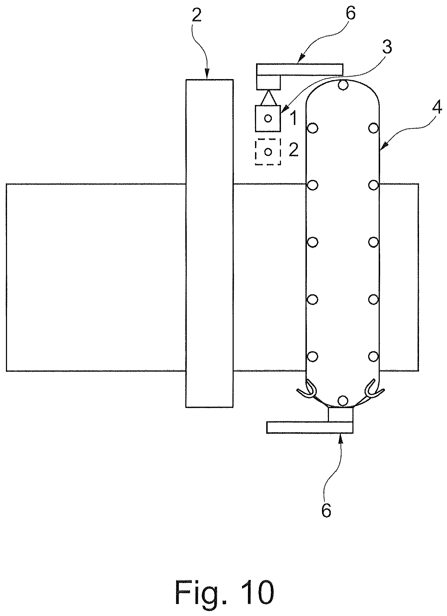

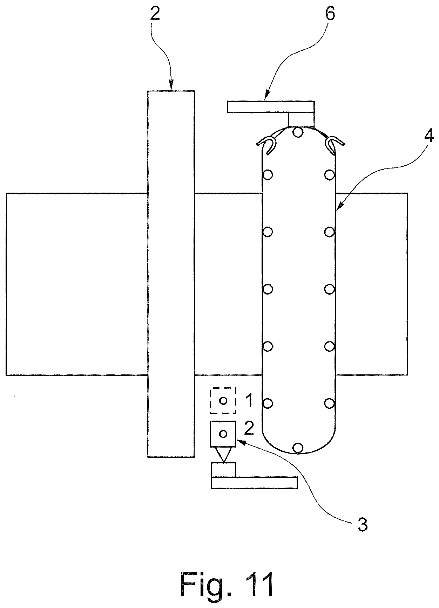

Vorzugsweise findet die Übergabe der Werkzeuge 5 zwischen der Übergabeeinrichtung 6 und der Spindeleinheit 3 an den Endpunkten der Führungseinrichtung 2 statt. Dadurch kann eine der Spindeleinheiten 3 eine Bearbeitung ausführen, während die andere Spindeleinheit 3 einen Werkzeugwechsel durchführt, ohne dass es zu einer gegenseitigen Behinderung oder Kollisionen kommt. Die bearbeitende Spindeleinheit 3 kann somit die Bearbeitung ausführen, ohne dabei (wesentlichen) Einschränkungen bezüglich der Position, an der die Bearbeitung durchgeführt werden soll, durch die werkzeugwechselnde Spindeleinheit 3 unterworfen zu sein. Beide Spindeleinheiten 3 greifen dabei auf dieselbe Werkzeugwechselanordnung 4 zu. Fig. 10 und 11 verdeutlichen diese Ausführungsform.

Vorzugsweise weist die Werkzeugwechselanordnung 4 zumindest ein Endlosumlaufelement 7 auf, an dem die Werkzeuge 5 angeordnet sind. Insbesondere kann es sich hier um eine Kette handeln, wie in Fig. 12 gezeigt. Dadurch wird ein schnelles und technisch einfaches Austauschen der Werkzeuge möglich. Ebenso können diese schnell und einfach bereitgestellt werden.

Insbesondere können auch zwei Endlosumlaufelemente 7 in der Werkzeugwechselanordnung 4 vorgesehen sein, wie in Fig. 5 dargestellt. Dadurch ist möglich, dass, wenn beide Spindeleinheiten 3 mit Werkzeugen 5 mehrerer Endlosumlaufelemente 7 versorgt werden, mehr Werkzeuge 5 für eine Spindeleinheit 3 zur Verfügung stehen. In dem Fall, dass ein Endlosumlaufelement 7 fest einer Spindeleinheit 3 zugeordnet ist, ist ein unabhängiger Zugriff der Spindeleinheiten 3 auf das jeweilige Endlosumlaufelement 7 und die dort gespeicherten Werkzeuge 5 möglich.

Insbesondere kann die Führungseinrichtung 2 als Portal oder Ausleger ausgebildet sein. Dadurch wird ein flexibler Einsatz ermöglicht.

Die Werkzeugwechselanordnung 4 kann stationär, d.h. ortsfest in Bezug auf die Umgebung, vorgesehen sein. Dies ermöglicht eine einfache Konstruktion. Eine derartige erste Ausführungsform ist in Fig. 5 gezeigt. Alternativ kann die Werkzeugwechselanordnung 4 mitfahrend mit der Führungseinrichtung 2 angeordnet sein, wie die Ausführungsform in Fig. 12 zeigt. Dies bedeutet, dass eine kurze Wechselzeit und eine erhöhte Flexibilität gegeben sind.

Selbstverständlich sind auch Kombinationen der in den Fig. 5 bis 12 gezeigten Ausführungsformen möglich. Zum Beispiel kann auch eine mitfahrend zur Führungseinrichtung angeordnete Wechselanordnung zwei Endlosumlaufelemente aufweisen.

Auch wenn in den Beispielen auf einen Kettenwechsler eingegangen wurde, ist ersichtlich, dass sich die erfindungsgemäßen Vorteile auch auf andersartige Wechselanordnungen beziehen.

## Patentansprüche

1. Bearbeitungsvorrichtung (1), insbesondere Bearbeitungszentrum zur Bearbeitung von Werkstücken, die bevorzugt zumindest teilweise aus Holz, Holzwerkstoffen, Kunststoff oder dergleichen bestehen, mit
einer balkenförmigen Führungseinrichtung (2),
zumindest zwei Spindeleinheiten (3), die auf einer Längsseite der Führungsanordnung (2) verfahrbar zu dieser angeordnet sind, und
einer Werkzeugwechselanordnung (4) zum Versorgen der Spindeleinheiten (3) mit Bearbeitungswerkzeugen und/oder Bearbeitungsaggregaten (5), wobei die Spindeleinheiten (3) derart angeordnet sind, dass sie in zumindest eine Richtung unabhängig voneinander verfahrbar sind, und die Bearbeitungsvorrichtung derart eingerichtet ist, dass die Spindeleinheiten (3) unabhängig voneinander auf die Werkzeugwechselanordnung zugreifen können, **dadurch gekennzeichnet, dass** die Werkzeugwechselanordnung (4), in der Draufsicht betrachtet, zumindest abschnittsweise derart an einer Längsseite der Führungseinrichtung (2) angeordnet ist, dass
a) die Spindeleinheiten (3) zwischen der Führungseinrichtung (2) und der Werkzeugwechselanordnung (4) angeordnet sind, oder
b) die Führungseinrichtung (2) zwischen den Spindeleinheiten (3) und der Werkzeugwechselanordnung (4) angeordnet ist, wobei die Werkzeugwechselanordnung (4) auf der Längsseite der Führungseinrichtung (2) angeordnet ist und die Bearbeitungsvorrichtung zumindest eine Übergabeeinrichtung (6) aufweist, die Bearbeitungswerkzeuge und/oder Bearbeitungsaggregate (5) von der Werkzeugwechselanordnung (4) an die Spindeleinheiten (3) und von den Spindeleinheiten (3) an die Werkzeugwechselanordnung (4) übermittelt.

2. Bearbeitungsvorrichtung (1) nach Anspruch 1, bei der die Werkzeugwechselanordnung (4) parallel zu der Führungseinrichtung (2) angeordnet ist.

3. Bearbeitungsvorrichtung (1) nach Anspruch 1 oder 2, bei der die Werkzeugwechselanordnung (4) bezüglich der Spindeleinheiten (3) nach oben oder unten versetzt angeordnet ist.

4. Bearbeitungsvorrichtung (1) nach einem der vorhergehenden Ansprüche, bei der die Spindeleinheiten (3) unterschiedlich zueinander ausgebildet sind.

5. Bearbeitungsvorrichtung (1) nach einem der vorhergehenden Ansprüche, bei der zumindest eine der Spindeleinheiten (3) als 4-Achs-Spindeleinheit ausgebildet ist, und/oder bei der zumindest eine der Spindeleinheiten (3) als 5-Achs-Spindeleinheit ausgebildet ist.

6. Bearbeitungsvorrichtung (1) nach einem der vorhergehenden Ansprüche mit den Merkmalen der Alternative a) von Anspruch 1, bei der zumindest eine Übergabeeinrichtung (6) vorgesehen ist, die Bearbeitungswerkzeuge und/oder Bearbeitungsaggregate (5) von der Werkzeugwechselanordnung (4) an die Spindeleinheiten (3) und von den Spindeleinheiten (3) an die Werkzeugwechselanordnung (4) übermittelt.

7. Bearbeitungsvorrichtung (1) nach Anspruch 6 oder nach einem der vorhergehenden Ansprüche mit den Merkmalen der Alternative b) von Anspruch 1, bei der die Übergabeeinrichtung (6) in eine Richtung, die von der Längsrichtung der Führungseinrichtung (2) abweicht, bewegbar angeordnet ist.

8. Bearbeitungsvorrichtung (1) nach einem der vorhergehenden Ansprüche 1-5 mit den Merkmalen der Alternative b) von Anspruch 1, nach Anspruch 6 oder nach Anspruch 7, bei der die Übergabeeinrichtung (6) einen Antrieb aufweist.

9. Bearbeitungsvorrichtung (1) nach einem der Ansprüche 6 bis 8, bei der zwei Übergabeeinrichtungen (6) vorgesehen sind.

10. Bearbeitungsvorrichtung (1) nach Anspruch 9, bei der Übergabepunkte, an denen jeweils die Übergabe der Bearbeitungswerkzeuge und/oder Bearbeitungsaggregate (5) zwischen einer Übergabeeinrichtung (6) und einer Spindeleinheit (3) stattfindet, an den beiden Enden der Führungseinrichtung (2) liegen.

11. Bearbeitungsvorrichtung (1) nach einem der vorhergehenden Ansprüche, bei der die Werkzeugwechselanordnung (4) zumindest ein Endlosumlaufelement (7), insbesondere eine Kette, aufweist, an dem Bearbeitungswerkzeuge und/oder Bearbeitungsaggregate (5) angeordnet sind, wobei bevorzugt zwei Endlosumlaufelemente (7), insbesondere Ketten, vorgesehen sind.

12. Bearbeitungsvorrichtung (1) nach einem der Ansprüche 1 bis 11, bei der die Werkzeugwechselanordnung (4) mitfahrend mit der Führungseinrichtung (2) oder stationär angeordnet ist.

## Claims

1. Machining apparatus (1), in particular machining centre for machining workpieces which are preferably at least partially made of wood, derived timber products, plastic or the like, having
a beam-like guide device (2),
at least two spindle units (3) which are arranged on one longitudinal side of the guide assembly (2) so as to be movable relative thereto, and
a tool change assembly (4) for supplying the spindle units (3) with machining tools and/or machining units (5),
wherein the spindle units (3) are arranged in such a way that they are movable in at least one direction independently of each other, and
the machining apparatus is designed in such a way that the spindle units (3) can access the tool change assembly independently of each other,
**characterised in that** the tool change assembly (4), seen in plan view, in at least one section is arranged on one longitudinal side of the guide device (2) in such a way that
a) the spindle units (3) are arranged between the guide device (2) and the tool change assembly (4), or
b) the guide device (2) is arranged between the spindle units (3) and the tool change assembly (4), wherein the tool change assembly (4) is arranged on the longitudinal side of the guide device (2) and the machining apparatus has at least one transfer device (6) which transfers machining tools and/or machining units (5) from the tool change assembly (4) to the spindle units (3) and from the spindle units (3) to the tool change assembly (4).

2. Machining apparatus (1) according to claim 1, in which the tool change assembly (4) is arranged parallel to the guide device (2).

3. Machining apparatus (1) according to claim 1 or 2, in which the tool change assembly (4) is offset upwardly or downwardly relative to the spindle units (3).

4. Machining apparatus (1) according to any of the preceding claims, in which the spindle units (3) are constructed differently to each other.

5. Machining apparatus (1) according to any of the preceding claims, in which at least one of the spindle units (3) is constructed as a four-axle spindle unit, and/or in which at least one of the spindle units (3) is constructed as a five-axle spindle unit.

6. Machining apparatus (1) according to any of the preceding claims having the characteristics of alternative a) of claim 1, in which there is provided at least one transfer device (6) which transfers machining tools and/or machining units (5) from the tool change assembly (4) to the spindle units (3) and from the spindle units (3) to the tool change assembly (4).

7. Machining apparatus (1) according to claim 6 or according to any of the preceding claims having the characteristics of alternative b) of claim 1, in which the transfer device (6) is arranged so as to be movable in a direction which differs from the longitudinal direction of the guide device (2).

8. Machining apparatus (1) according to any of the preceding claims 1-5 having the characteristics of alternative b) of claim 1, according to claim 6 or according to claim 7, in which the transfer device (6) has a drive.

9. Machining apparatus (1) according to any of claims 6 to 8, in which two transfer devices (6) are provided.

10. Machining apparatus (1) according to claim 9, in which transfer points, at which in each case transfer of the machining tools and/or machining units (5) between a transfer device (6) and a spindle unit (3) takes place, are located at both ends of the guide device (2).

11. Machining apparatus (1) according to any of the preceding claims, in which the tool change assembly (4) has at least one endlessly revolving element (7), in particular a chain, on which machining tools and/or machining units (5) are arranged, wherein preferably two endlessly revolving elements (7), in particular chains, are provided.

12. Machining apparatus (1) according to any of claims 1 to 11, in which the tool change assembly (4) is arranged so as to travel with the guide device (2) or stationarily.

## Revendications

1. Dispositif d'usinage (1), en particulier centre d'usinage destiné à l'usinage de pièces qui sont de préférence au moins en partie en bois, en dérivés de bois, en plastique ou analogues, avec
un dispositif de guidage (2) en forme de barre,
au moins deux unités à broche (3) qui sont agencées sur un côté long du dispositif de guidage (2) de manière à être déplaçables par rapport à celui-ci, et
un dispositif de changement d'outil (4) qui est destiné à alimenter les unités à broche (3) avec des outils d'usinage et/ou des modules d'usinage (5),
dans lequel
les unités à broche (3) sont agencées de telle sorte qu'elles peuvent être déplacées dans au moins une direction indépendamment l'une de l'autre,
et le dispositif d'usinage est conçu de telle sorte que les unités à broche (3) peuvent accéder indépendamment l'une de l'autre au dispositif de changement d'outil, **caractérisé en ce que**
le dispositif de changement d'outil (4), vu de dessus, est agencé au moins en partie de telle sorte au niveau d'un côté long du dispositif de guidage (2) que
a) les unités à broche (3) sont agencées entre le dispositif de guidage (2) et le dispositif de changement d'outil (4) ou
b) le dispositif de guidage (2) est agencé entre les unités à broche (3) et le dispositif de changement d'outil (4), dans lequel le dispositif de changement d'outil (4) est agencé sur le côté long du dispositif de guidage (2) et le dispositif d'usinage comporte au moins un dispositif de transfert (6) qui transmet des outils d'usinage et/ou des modules d'usinage (5) du dispositif de changement d'outil (4) aux unités à broche (3) et des unités à broche (3) au dispositif de changement d'outil (4).

2. Dispositif d'usinage (1) selon la revendication 1, où le dispositif de changement d'outil (4) est agencé parallèlement au dispositif de guidage (2).

3. Dispositif d'usinage (1) selon la revendication 1 ou 2, où le dispositif de changement d'outil (4) est agencé décalé vers le haut ou le bas par rapport aux unités à broche (3).

4. Dispositif d'usinage (1) selon l'une quelconque des revendications précédentes, où les unités à broche (3) sont réalisées différentes l'une de l'autre.

5. Dispositif d'usinage (1) selon l'une quelconque des revendications précédentes, où au moins l'une des unités à broche (3) est réalisée comme une unité à broche à 4 axes, et/ou où au moins l'une des unités à broche (3) est réalisée comme une unité à broche à 5 axes.

6. Dispositif d'usinage (1) selon l'une quelconque des revendications précédentes avec les caractéristiques de l'alternative a) de la revendication 1, où il est prévu au moins un dispositif de transfert (6) qui transmet des outils d'usinage et/ou des modules d'usinage (5) du dispositif de changement d'outil (4) aux unités à broche (3) et des unités à broche (3) au dispositif de changement d'outil (4).

7. Dispositif d'usinage (1) selon la revendication 6 ou selon l'une quelconque des revendications précédentes avec les caractéristiques de l'alternative b) de la revendication 1, où le dispositif de transfert (6) est agencé mobile dans une direction qui s'écarte de la direction longitudinale du dispositif de guidage (2).

8. Dispositif d'usinage (1) selon l'une quelconque des revendications précédentes 1 à 5 avec les caractéristiques de l'alternative b) de la revendication 1, selon la revendication 6 ou selon la revendication 7, où le dispositif de transfert (6) comporte un dispositif d'entraînement.

9. Dispositif d'usinage (1) selon l'une quelconque des revendications 6 à 8, où il est prévu deux dispositifs de transfert (6).

10. Dispositif d'usinage (1) selon la revendication 9, où des points de transfert, au niveau desquels a lieu à chaque fois le transfert des outils d'usinage et/ou modules d'usinage (5) entre un dispositif de transfert (6) et une unité à broche (3), se situent aux deux extrémités du dispositif de guidage (2).

11. Dispositif d'usinage (1) selon l'une quelconque des revendications précédentes, où le dispositif de changement d'outil (4) comporte au moins un élément de circulation sans fin (7), en particulier une chaîne, au niveau de laquelle sont agencés des outils d'usinage et/ou des modules d'usinage (5), dans lequel deux éléments de circulation sans fin (7), en particulier des chaînes, sont de préférence prévus.

12. Dispositif d'usinage (1) selon l'une quelconque des revendications 1 à 11, où le dispositif de changement d'outil (4) est agencé de manière à se déplacer avec le dispositif de guidage (2) ou de manière stationnaire.
